# FASCICULE DE BREVET EUROPEEN

(11) **EP 0 934 797 B1**
(45) Date de publication et mention de la délivrance du brevet: **12.03.2003**
(21) Numéro de dépôt: 99400034.7
(22) Date de dépôt: 08.01.1999
(51) Int. Cl.: B23K 26/02

(54) **Procédé de réglage de la position d'une caméra de contrôle thermographique d'une soudure**
Verfahren zum Positionieren einer eine Schweissverbindung erkennenden thermographischen Aufnahmvorrichtung
Thermographic camera position control method used in the welding field

(30) Priorité: 05.02.1998 FR 9801311
(43) Date de publication de la demande: 11.08.1999
(73) Titulaire: SOLLAC S.A., 92800 Puteaux (FR)
(72) Inventeur: Juret, Thierry, 57530 Courcelles Chaussy (FR); Philippe, Jean, 57920 Veckring (FR)
(74) Mandataire: Plaisant, Sophie Marie

(56) Documents cités:
- DE-U- 29 606 826
- US-A- 5 045 668
- US-A- 5 601 737

## Description

La présente invention concerne le domaine du soudage, et en particulier le domaine du contrôle d'une soudure par thermographie infrarouge.

Pendant une opération de soudage de deux flans métalliques bords à bords au moyen d'une tête de soudage générant un faisceau de soudage à haute densité d'énergie, du type faisceau laser ou faisceau d'électrons, il existe essentiellement trois phases : la montée en température du matériau, la fusion d'une quantité déterminée de métal et le refroidissement du joint soudé et de son environnement. Le temps, la localisation spatiale et la température sont les trois variables qui définissent l'ensemble du procédé au niveau thermique. Ceci implique qu'à un instant donné, pour des conditions de soudage fixées, un point situé dans la zone en cours de soudage possède un niveau thermique donné.

Ainsi, l'analyse de l'image thermique de la soudure en cours de réalisation permet d'une part de contrôler la qualité du joint soudé, d'autre part de contrôler la qualité du processus de soudage, et ainsi agir en temps réel sur celui-ci en cas de dérive.

Il est connu pour cela d'utiliser une caméra à capteurs infrarouge qui relève le profil thermique avant, pendant ou après la fusion.

Selon le type d'informations recherchées, la caméra infrarouge peut observer la zone située immédiatement en amont de la zone en fusion, ce qui permet par exemple de disposer d'une image thermique utilisable pour le guidage de la tête de soudage (le creux du profil thermique transversal au plan de joint est représentatif du jeu qui sépare les deux flans métalliques à souder). La caméra infrarouge peut également observer l'image thermique juste sur le bain de métal en fusion, pour connaître par exemple la température sur le métal, ainsi que la largeur fondue. Elle peut également surveiller une zone en aval de la zone en fusion, ce qui permet par exemple de déterminer la profondeur de pénétration et les dérives éventuelles du processus de soudage.

La visualisation des images thermiques de la zone observée par la caméra infrarouge tout au long de la soudure peut se présenter sous trois formes:
- la carte thermique longitudinale,
- le profil transversal,
- la surface thermique en trois dimensions.

Les caméras infrarouges utilisées dans ce type d'application peuvent être des caméras à balayage dont la déflexion du champ élémentaire se fait par des procédés opto-mécaniques ou électroniques. Parmi les dispositifs opto-mécaniques, on peut citer la rotation du système complet, l'oscillation d'un miroir plan, la rotation d'un tambour de miroir polygonal, la rotation d'un prisme réfringent polygonal, la rotation d'un tambour de lentilles, le diaporamètre et la barrette linéaire de détecteurs. Ce dernier dispositif présente l'avantage de ne pas nécessiter de mouvements mécaniques. On peut également utiliser une caméra matricielle.

Cette technique connue de contrôle des soudures et du processus de soudage, par thermographie infrarouge, est par exemple décrite dans « La Thermographie Infrarouge », Technique et Documentation Lavoisier, 3ème édition, 1989, ou dans « Capteurs infrarouges : les soudures analysées en temps réel », Mesures, 19 janvier 1987.

Pour que les images thermiques relevées par la caméra infrarouge permettent de contrôler les soudures et de réguler le processus de soudage de manière parfaitement fiable, compte tenu des forts gradients thermiques rencontrés dans le procédé de soudage, plusieurs centaines de degrés par mm, il est nécessaire de maîtriser parfaitement la position de la zone d'observation de la caméra par rapport au point d'impact du faisceau de soudage, en termes de positionnement longitudinal selon l'axe de la soudure (selon le plan de joint), de positionnement transversal par rapport à cet axe, et de mise au point de l'optique de la caméra.

En effet, si le positionnement de la zone d'observation de la caméra par rapport au point d'impact du faisceau de soudage n'est pas parfaitement maîtrisé, l'interprétation des cartographies thermiques sera difficile car ces cartographies thermiques ne seront pas le reflet de la zone considérée, mais d'une zone adjacente.

Ainsi par exemple si la zone observée par la caméra est située théoriquement à 5 mm en aval du point d'impact du faisceau de soudage, dans l'axe du soudage, et que la zone réellement observée est située à 3 mm en aval du point d'impact du faisceau, l'interprétation de l'image thermique en termes de niveau maximum de température pourrait conduire à une diminution de la puissance du faisceau, et par conséquent à la livraison de flans soudés dont la soudure est de mauvaise qualité. Si la zone réellement observée par la caméra est décalée transversalement par rapport à l'axe de soudage, le profil thermique sera décalé, et ce décalage du profil thermique sera interprété comme un décalage de l'axe de soudage par rapport au plan de joint des flans à souder. Un recalage de cet axe entraînera un réel décalage alors que les profils thermiques relevés par la caméra seront parfaitement centrés.

Il est donc très important de maîtriser parfaitement cette position de la zone visée par la caméra par rapport au point d'impact du faisceau de soudage en disposant d'un réglage de la position relative de la caméra de thermographie infrarouge et de la tête de soudage qui soit parfaitement reproductible, c'est à dire que cette position parfaite soit garantie à chaque réglage.

On peut imaginer de régler la position de la tête de soudage et de la caméra infrarouge par rapport à un point de référence dont la position dans l'espace est fixe, par exemple un point du bâti de la machine de soudage. Mais malgré la fiabilité d'un tel référentiel et donc du réglage de la position relative de la tête de soudage et de la caméra, la position exacte de la zone des flans métalliques visée par la caméra par rapport au point d'impact du faisceau de soudage sur ces flans, ne peut être garantie du fait des tolérances de montage des différents organes constitutifs de la caméra et de la tête de soudage et des variations possibles dans le temps des chemins optiques de ces appareils.

Le but de l'invention est de proposer un procédé de réglage géométrique de la position par rapport à une tête de soudage, d'une caméra de contrôle thermographique d'une soudure d'au moins deux flans métalliques, qui permet de garantir le positionnement de la zone des flans visée par la caméra par rapport au point d'impact du faisceau de soudage sur ces flans, en s'affranchissant des problèmes de tolérances et de variation des chemins optiques mentionnés ci-avant.

A cet effet, l'invention a pour objet un procédé de réglage de la position par rapport à une tête de soudage, d'une caméra de contrôle thermographique d'une soudure, dans une installation de soudage d'au moins deux flans métalliques selon un plan de joint, comprenant une tête de soudage générant un faisceau de soudage à haute densité d'énergie, laser ou faisceau d'électrons, et une caméra de contrôle thermographique de la soudure réalisée au moyen dudit faisceau de soudage, toutes deux supportées par un bâti, dans lequel ;
- au cours d'une première étape, on positionne le faisceau de soudage en référence par rapport à une source lumineuse ponctuelle située dans une zone de l'installation de soudage accessible par le faisceau de soudage, dans un plan P voisin ou confondu avec le plan médian des deux plans contenant les faces principales des flans métalliques en regard de la tête de soudage et de la caméra,
- au cours d'une seconde étape, on déplace le bâti, dans la direction du plan de joint, d'une distance d déterminée correspondant à la distance désirée selon cette direction entre le point d'impact du faisceau sur les flans métalliques à souder et la zone dé visée de la caméra sur lesdits flans,
- au cours d'une troisième étape, on ajuste la visée de la caméra pour que celle-ci vise la source lumineuse,
- au cours d'une dernière étape, on verrouille la caméra en position.

Selon d'autres caractéristiques de l'invention,
- au cours de la première étape, on positionne le faisceau de soudage en référence au moyen d'un faisceau laser de visée, visible, de basse puissance, coaxial au faisceau de soudage ;
- lorsque le faisceau de soudage à haute densité d'énergie est un faisceau laser, au cours de la première étape, on positionne ledit faisceau de soudage en référence au moyen de ce faisceau, en le couplant avec un dispositif qui le rend visible ;
- on choisit une source lumineuse comportant un diaphragme qui génère une lumière isotrope dans au moins les directions dirigées vers la caméra;
- au cours de la première étape, on positionne le faisceau de soudage en référence sur la source lumineuse en visant avec le faisceau laser de visée ou le faisceau laser de soudage, le diaphragme de la source lumineuse ;
- au cours de la première étape, on positionne le faisceau de soudage en référence sur la source lumineuse en visant avec le faisceau laser de visée ou le faisceau laser de soudage, un point O dont les coordonnées spatiales par rapport à celles du diaphragme de la source lumineuse sont maîtrisées ;
- on ajuste la visée de la caméra par déplacement de celle-ci, et/ou par fenêtrage électronique ;
- au cours d'une étape intermédiaire avant de verrouiller la caméra, on règle la distance de focalisation de ladite caméra sur la source lumineuse.

L'invention a également pour objet un dispositif pour la mise en oeuvre du procédé dans une installation de soudage d'au moins deux flans métalliques comprenant une tête de soudage générant un faisceau de soudage à haute densité d'énergie et une caméra de contrôle thermographique de la soudure réalisée au moyen dudit faisceau de soudage, toutes deux supportée par un bâti, caractérisé en ce qu'il comporte
- des moyens de déplacement du bâti,
- une source lumineuse fixe, située dans une zone de l'installation de soudage, accessible par le faisceau de soudage,
- des moyens de réglage géométrique de la position de la caméra par rapport à la tête de soudage.

Selon une autre caractéristique de l'invention, la source lumineuse est constituée d'une cavité cylindrique ou sphérique et d'un diaphragme formé par une plaque opaque percée d'un orifice dont le diamètre est inférieur à 1 mm, l'épaisseur de la plaque opaque au niveau de l'orifice étant inférieure à 0,3 mm ;
- les moyens de réglage géométrique de la position de la caméra par rapport à la tête de soudage comportent au moins un chariot micrométrique.

Les caractéristiques et avantages de l'invention apparaîtront à la suite de la description qui suit, donnée uniquement à titre d'exemple, faite en référence aux dessins annexés, dans lesquels :
- la figure 1 représente une vue partielle de côté d'une installation de soudage comprenant une tête de soudage et une caméra de contrôle thermographique, munie d'un dispositif selon l'invention pour la mise en oeuvre du procédé selon l'invention ;
- les figures 2A à 2D sont des vues schématiques illustrant les différentes étapes du procédé selon l'invention ;
- la figure 3 est une vue en coupe d'un exemple de réalisation d'une source lumineuse selon l'invention.

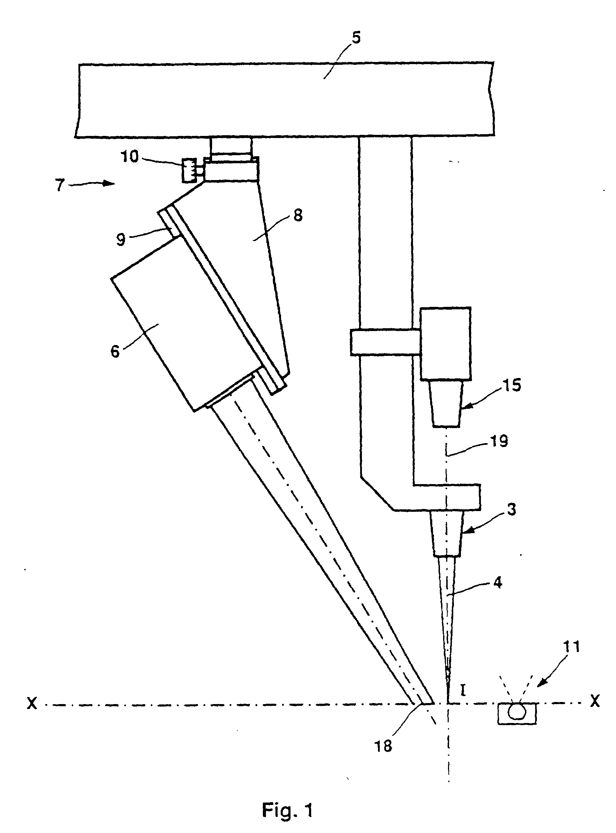

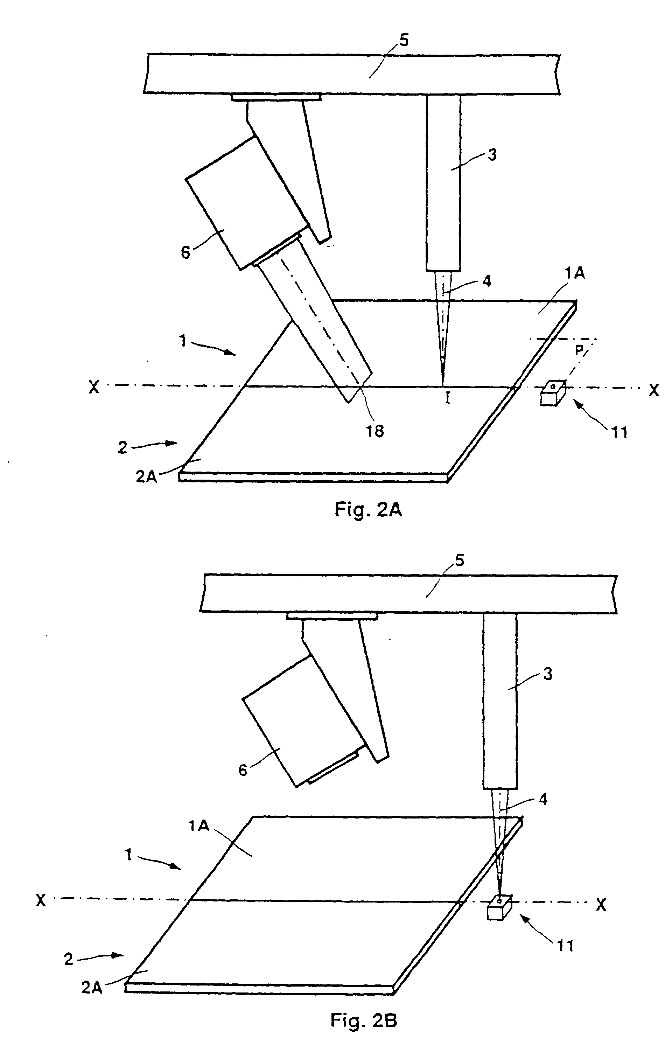

On reconnaît sur les figures 1 et 2A à 2D, une installation de soudage au moyen d'un faisceau à haute densité d'énergie, d'au moins deux flans métalliques 1 et 2 (non représentés sur la figure 1), placés bord à bord ou en léger recouvrement, en acier, aluminium ou alliage d'aluminium, nus ou revêtus, d'épaisseurs identiques ou différentes, au niveau d'un plan de joint matérialisé sur les figures par l'axe X-X.

Ce type d'installation est bien connu dans l'état de la technique, et on se contentera donc dans la description qui suit de ne décrire que les éléments nécessaires à la compréhension de l'invention.

L'installation comporte un moyen de génération d'un faisceau à haute densité d'énergie adapté pour souder les flans métalliques, du type faisceau laser ou faisceau d'électrons, désigné par la référence 3, le faisceau étant désigné par la référence 4.

Le moyen 3 de génération du faisceau de soudage 4, encore appelé tête de soudage 3, est fixé à un bâti 5, généralement une poutre, déplacable au moins dans la direction du plan de joint des flans métalliques à souder. Le déplacement du bâti dans l'installation de soudage est effectué par des moyens connus mis en oeuvre dans les installations de soudage disponibles sur le marché. Il ne sont donc pas décrits ni représentés.

Sur ce bâti 5, une caméra infrarouge 6 est également fixée. Selon le type d'informations recherchées, la caméra 6 peut observer la zone située immédiatement en amont de la zone en fusion, observer l'image thermique juste sur le bain de métal en fusion, ou surveiller une zone en aval de la zone en fusion. Sur les figures, si on considère que le bâti 5 se déplace de la gauche vers la droite pendant l'opération de soudage des flans, la caméra 6 représentée est disposée de telle sorte qu'elle surveille une zone en aval de la zone en fusion.

La caméra 6 est fixée sur le bâti 5 par l'intermédiaire des moyens 7 de réglage géométrique de sa position sur ledit bâti par rapport à la tête de soudage.

Dans l'exemple de réalisation représenté, ces moyens 7 sont constitués d'un support 8 sur lequel la caméra 6 est montée par l'intermédiaire d'une glissière de réglage 9, et d'une table micrométrique 10 disposée entre le support 8 et le bâti 5 et permettant un déplacement précis et reproductible de la caméra sur ledit bâti.

Une source lumineuse ponctuelle 11 est fixée dans l'installation de soudage, dans une zone de ladite installation accessible par le faisceau de soudage 4, située dans un plan P voisin ou confondu avec le plan médian entre les deux plans contenant les faces principales en regard avec la tête de soudage 3 et la caméra infrarouge 6 (les faces supérieures dans l'exemple de réalisation représenté), respectivement 1A et 2A des flans métalliques 1 et 2. Il convient d'interpréter que lorsque le plan P est voisin du plan médian entre les deux plans contenant les faces principales 1A et 2A des flans 1 et 2, ce plan P est un plan parallèle audit plan médian, décalé selon une direction orthogonale à ce plan médian dans un sens ou dans l'autre, d'une distance inférieure à 5 mm.

Il convient de noter que lorsque les deux flans métalliques 1 et 2 sont d'épaisseurs identiques, ou lorsque les deux flans métalliques 1 et 2 sont d'épaisseurs différentes mais sont mis en référence sur la table support de l'installation de soudage par l'intermédiaire de leurs faces principales en regard avec la tête de soudage 3 et la caméra infrarouge 6, les deux faces 1A et 2A des flans sont contenues dans le même plan. Dans ce cas, la source lumineuse 11 est située dans un plan P voisin ou confondu avec le plan contenant ces faces principales 1A et 2A.

Avantageusement, le plan P est confondu avec le plan médian entre les deux plans contenant les faces principales 1A, 2A en regard avec la tête de soudage 3 et la caméra infrarouge 11.

Cette source lumineuse 11 est une source de lumière isotrope dans au moins les directions dirigées vers la caméra 6, en tenant compte des différentes positions possibles de la caméra dans son espace de réglage, c'est à dire que dans au moins ces directions, le rayonnement émis par la source lumineuse 11 est de même intensité. Pour des commodités de réalisation d'une telle source lumineuse, et pour que celle-ci soit adaptée aux trois cas possibles de visée de la caméra infrarouge 6 (avant, pendant ou après la fusion), il est préférable que cette source lumineuse génère une lumière isotrope selon un cône d'au moins 120°.

L'intensité lumineuse de la source 11 doit être compatible avec la bande spectrale de la caméra infrarouge 6, afin que cette dernière puisse la repérer.

Par exemple, comme représenté sur les figures, la source lumineuse ponctuelle 11 est constituée d'une cavité 12 réfléchissante, cylindrique ou sphérique, à l'intérieur de laquelle est disposée un moyen de génération de lumière 17, par exemple une ampoule, et d'un diaphragme formé d'une plaque opaque 13 percée d'un orifice 14 dont le diamètre est inférieur à 1 mm. Pour assurer l'isotropie de la lumière, l'épaisseur de la plaque opaque 13 au niveau de l'orifice 14 est inférieure à 0,5 mm, de préférence inférieur à 0,3 mm. En effet, plus l'épaisseur de la plaque opaque 13 au niveau de l'orifice 14 est petite, plus le cône de lumière isotrope sera étendu. Ainsi, si l'épaisseur de la plaque opaque 13 au niveau de l'orifice 14 est inférieur à 0,3 mm, la lumière générée sera isotrope sur quasiment 180°.

Avantageusement, on choisit une épaisseur de la plaque opaque 13 au niveau de l'orifica 14, inférieure ou égale au diamètre dudit orifice.

Comme on va le constater dans la description du procédé selon l'invention qui va suivre, il est essentiel pour pouvoir mettre en oeuvre le procédé, que l'installation de soudage comporte :
- des moyens de déplacement du bâti 5 (non représentés),
- une source lumineuse 11, située dans une zone de l'installation de soudage accessible par le faisceau de soudage,
- des moyens 7 de réglage de la position de la caméra 6 par rapport à la tête de soudage 3.

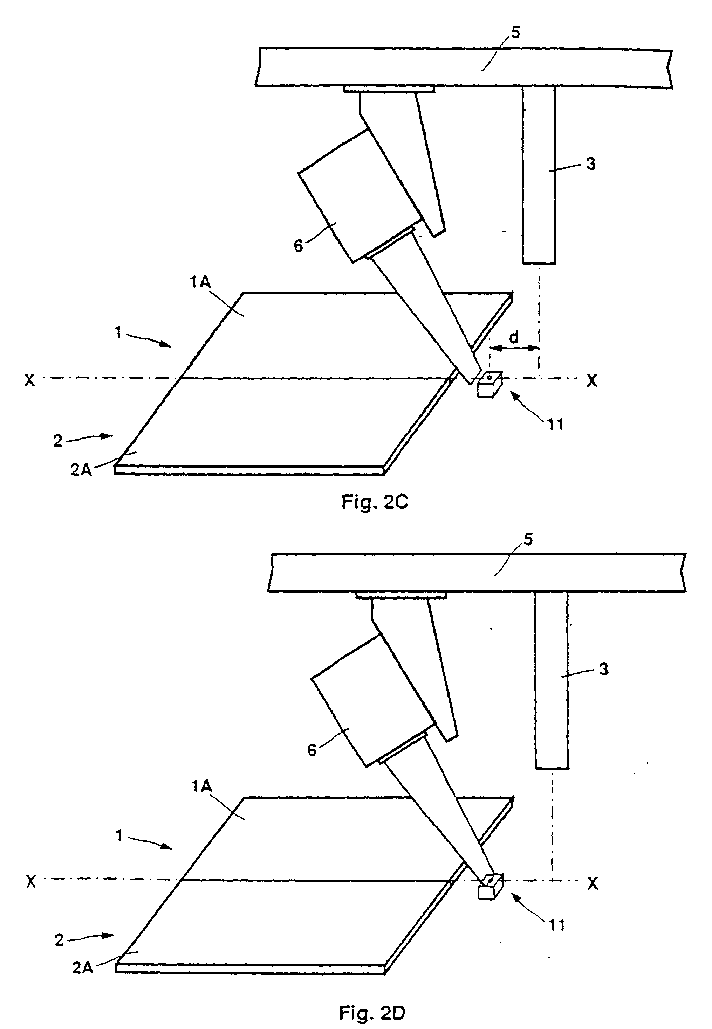

Le procédé de réglage de la position de la caméra 6 par rapport à la tête de soudage 3 présente quatre étapes :
- une première étape, dont le résultat est représenté à la figure 2B, au cours de laquelle on positionne le faisceau de soudage 4 en référence par rapport à la source lumineuse ponctuelle 11 située dans une zone de l'installation de soudage accessible par le faisceau de soudage, dans un plan P voisin ou confondu avec le plan médian des deux plans contenant les faces principales 1A, 2A des flans métalliques en regard de la tête de soudage 3 et de la caméra infrarouge 6,
- une seconde étape, dont le résultat est représenté à la figure 2C, au cours de laquelle on déplace le bâti 5, dans la direction du plan de joint, d'une distance d déterminée correspondant à la distance désirée selon cette direction entre le point d'impact I du faisceau sur les flans métalliques à souder et la zone 18 de visée de la caméra 6 sur lesdits flans,
- une troisième étape, dont le résultat est représenté à la figure 2D, au cours de laquelle on ajuste la visée de la caméra 6 pour que celle-ci vise la source lumineuse 11,
- une dernière étape au cours de laquelle on verrouille la caméra 6 en position.

Le positionnement du faisceau de soudage 4 en référence par rapport à la source lumineuse ponctuelle 11 (première étape du procédé) peut être effectué de deux manières différentes.

Selon un premier mode préféré de réalisation, le plus simple, on positionne le faisceau de soudage 4 directement sur l'orifice 14 de la source lumineuse 11. Pour cela, on déplace le bâti 5, jusqu'à ce que le point d'impact P du faisceau de soudage 4 soit confondu avec ledit orifice 14. Pendant cette opération, il n'est pas nécessaire que le moyen de génération de la lumière 17 soit en fonction.

Il est bien évident que le faisceau doit être de basse puissance, par exemple entre 2 et 100 miliwatts, pour éviter que celui-ci n'entraîne la dégradation de la source lumineuse 11. En conséquence, si la tête de soudage 3 peut générer un faisceau dont la puissance est réglable de quelques miliwatts jusqu'à la puissance nécessaire pour réaliser la soudure des deux flans métalliques 1, 2 (fonction de la nature des matériaux constitutifs des flans), on peut utiliser directement le faisceau de soudage. Dans ce cas, il est préférable de coupler ce faisceau de soudage avec un dispositif qui le rend visible, par exemple une caméra infrarouge, ce qui facilite la tâche.

On peut également utiliser pour cette première étape, un faisceau laser de visée 19, visible à l'oeil, de basse puissance, coaxial au faisceau de soudage, par exemple un laser hélium-néon ou une diode laser générant un faisceau de couleur rouge.

Dans l'exemple de réalisation représenté sur la figure 1, on voit une tête 15 générant un faisceau laser de visée, ledit faisceau laser de visée 19 étant coaxial au faisceau de soudage 4. La tête 15 est par exemple montée pivotante sur la tête de soudage 3, laquelle est également escamotable pour laisser la place à la tête 15. On peut également imaginer de remplacer dans l'installation de soudage la tête de soudage 3 par cette tête 15, pour réaliser cette étape de positionnement du faisceau de soudage 4 en référence par rapport à la source lumineuse 11.

On peut aussi utiliser un dispositif du type lame semi-transparente, qui permet à une même tête laser de générer deux faisceaux de caractéristiques différentes.

Selon un second mode de réalisation, on peut positionner le faisceau de soudage 4 en référence par rapport à la source lumineuse 11 en visant avec le faisceau laser de visée 19 ou le faisceau de soudage 4, un point O dont les coordonnées spatiales par rapport à celles du diaphragme de la source lumineuse sont parfaitement maîtrisées. Il suffira dans ce cas, après avoir repéré ce point avec le laser de visée 19 ou le faisceau de soudage 4, de déplacer le bâti 5 pour venir positionner le faisceau de soudage 4 en référence sur la source lumineuse 11.

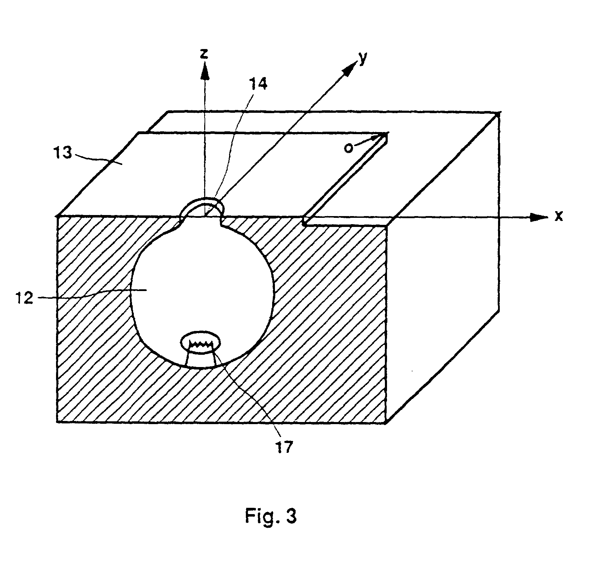

Par exemple, comme représenté sur la figure 3, on peut viser un point O correspondant à un escalier ménagé sur la plaque opaque 13 de la source lumineuse 11. Connaissant avec une grande précision les coordonnées spatiales de ce point O dans le repère (x, y, z) ayant pour origine le centre de l'orifice 14 de la source lumineuse 11, il est aisé de déplacer le bâti 5 selon les coordonnées inverses pour être positionné sur cet orifice.

Ce second mode de réalisation nécessite une parfaite maîtrise des déplacements du bâti 5.

La précision et la qualité des mesures réalisées par la caméra 6 au cours des opérations de soudage, dépendent directement de la qualité avec laquelle le positionnement du faisceau de soudage 4 en référence par rapport à la source lumineuse, a été effectué.

Le déplacement du bâti 5 dans la direction du plan de joint, d'une distance d déterminée correspondant à la distance désirée selon cette direction entre le point d'impact I du faisceau sur les flans métalliques à souder et la zone de visée 18 de la caméra sur lesdits flans soudés (deuxième étape du procédé), ne pose pas de problèmes particuliers.

Ensuite, on ajuste la visée de la caméra 6 pour que celle-ci vise la source lumineuse 11.

Cet ajustement de la visée de la caméra 6 peut être effectué de deux manières, soit par déplacement de ladite caméra, soit par fenêtrage électronique. Il peut également être nécessaire d'ajuster la visée de la caméra par déplacement de celle-ci et par fenêtrage électronique. Lorsque la caméra 6 est une caméra dite « linéaire », il est nécessaire d'ajuster sa visée par déplacement de celle-ci dans la direction du plan de joint, par l'intermédiaire des moyens 7 de réglage de sa position sur le bâti 5. Concernant son réglage dans le direction transversale au plan de joint, il est possible d'ajuster la visée par fenêtrage électronique, c'est à dire en choisissant les capteurs infrarouges dont est munie la caméra à activer. Lorsque la caméra 6 est une caméra dite « caméra 2D » ou une caméra dite « matricielle », il est possible d'ajuster la visée selon les deux directions, par fenêtrage électronique. On peut aussi utiliser une caméra pourvue d'un déflecteur optique qui permet d'ajuster sa visée.

Pour pouvoir réaliser cette opération, il est préférable de choisir une source lumineuse 11 comportant un diaphragme qui génère une lumière isotrope dans au moins les directions dirigées vers la caméra. Cette caractéristique permet d'assurer une détectivité optimale de la source lumineuse 11 par la caméra 6.

La position de la source lumineuse 11 dans l'installation de soudage est un élément important de l'invention. En effet, il faut d'une part que celle-ci soit située dans une zone de l'installation de soudage accessible par la caméra 6 et par le faisceau de soudage 4, par exemple d'un côté de la table support des flans métalliques, à l'extrémité de celle-ci. D'autre part, il est préférable, pour éviter tout transfert de repère de position superflu, de situer la source lumineuse 11 dans un plan P voisin ou confondu avec le plan médian des deux plans contenant les faces principales 1A, 2A des flans métalliques 1, 2, en regard de la tête de soudage 3 et de la caméra 6.

Le choix du plan P peut être multiple.

Selon un premier mode de réalisation, on peut choisir le plan P confondu avec le plan médian des deux plans contenant les faces principales 1A, 2A des flans métalliques 1, 2, en regard de la tête de soudage 3 et de la caméra 6. Ce choix permet, en cours de soudage, d'avoir une visée de la caméra 6 sur les flans, parfaitement nette et définie.

Selon un second mode de réalisation, on peut choisir le plan P voisin du plan médian des deux plans contenant les faces principales 1A, 2A des flans métalliques 1, 2, en regard de la tête de soudage 3 et de la caméra 6, c'est à dire un plan parallèle audit plan médian, décalé selon une direction orthogonale à ce plan médian dans un sens ou dans l'autre, d'une distance inférieure à 5 mm. Dans ce cas, la visée de la caméra 6 sur les flans est légèrement défocalisée, ce qui permet de générer un filtre passe-bas sur l'image perçue par ladite caméra.

Concernant la définition du plan médian des deux plans contenant les faces principales 1A, 2A des flans métalliques 1, 2, en regard de la tête de soudage 4 et de la caméra 6, deux choix sont également possibles.

Selon un premier mode de réalisation, ce plan médian est défini pour chaque gamme de fabrication, c'est à dire pour chaque type de flans métalliques 1, 2 à souder.

Selon un second mode de réalisation, ce plan médian est défini par la moyenne des plans médians des différentes gammes de fabrication habituelles.

Au cours de cette étape d'ajustage de la visée de la caméra 6 sur la source lumineuse 11, ou près cette étape, effectuée par étapes successives permettant de réaliser des ajustements précis des différents paramètres de la caméra, il est possible de régler la distance de focalisation de ladite caméra sur la source lumineuse, au moyen de la bague de mise au point de l'objectif de la caméra.

Une fois que la visée de la caméra 6 est parfaitement ajustée sur la source lumineuse 11, on verrouille la caméra en position, et les opérations de soudage et de contrôle de la soudure peuvent commencer.

Ce procédé de réglage de la position de la caméra 6 par rapport à la tête de soudage 4, peut être mis en oeuvre à chaque changement de campagne de fabrication, lorsque la caméra et/ou la tête de soudage a subi une opération d'entretien avec ou sans démontage, ou lorsque au cours du soudage, on constate une anomalie, c'est à dire lorsque le résultat du contrôle en termes de qualité de la soudure réalisée n'est pas conforme à l'état réel du cordon de soudure.

Compte tenu du fait que le réglage est effectué in-situ en prenant en compte directement la position relative entre le point d'impact I du faisceau de soudage 4 et la zone de visée 18 de la caméra 6, il est possible, en cours de campagne de soudage, de vérifier que le réglage de cette position est toujours correct.

## Revendications

1. Procédé de réglage de la position par rapport à une tête de soudage, d'une caméra de contrôle thermographique d'une soudure, dans une installation de soudage d'au moins deux flans métalliques (1,2) selon un plan de joint, comprenant une tête de soudage (3) générant un faisceau à haute densité d'énergie (4), laser ou faisceau d'électrons, et une caméra (6) de contrôle thermographique de la soudure réalisée au moyen de ladite tête de soudage, toutes deux supportées par un bâti (5), **caractérisé en ce que**:
- au cours d'une première étape, on positionne le faisceau de soudage (4) en référence par rapport à une source lumineuse (11), ponctuelle, située dans une zone de l'installation de soudage accessible par le faisceau de soudage (4), dans un plan P voisin ou confondu avec le plan médian des deux plans contenant les faces principales (1A, 2A) des flans métalliques (1, 2) en regard de la tête de soudage (3) et de la caméra (6);
- au cours d'une seconde étape, on déplace le bâti (5), dans la direction du plan de joint, d'une distance d déterminée correspondant à la distance désirée selon cette direction entre le point d'impact (I) du faisceau de soudage (4) sur les flans métalliques (1, 2) à souder et la zone (18) de visée de la caméra (6) sur lesdits flans ;
- au cours d'une troisième étape, on ajuste la visée de la caméra (6) pour que celle-ci vise la source lumineuse (11) ;
- au cours d'une dernière étape, on verrouille la caméra (6) en position.

2. Procédé selon la revendication 1, **caractérisé en ce que**, au cours de la première étape, on positionne le faisceau de soudage (4) en référence au moyen d'un faisceau laser de visée (19), visible, de basse puissance, coaxial au faisceau de soudage (4).

3. Procédé selon la revendication 1, **caractérisé en ce que** lorsque le faisceau de soudage (4) est un faisceau laser, au cours de la première étape, on positionne ledit faisceau de soudage (4) en référence au moyen de ce faisceau (4), en le couplant avec un dispositif qui le rend visible.

4. Procédé selon la revendication 1, **caractérisé en ce que** l'on choisit une source lumineuse (11) comportant un diaphragme qui génère une lumière isotrope dans au moins les directions dirigées vers la caméra (6).

5. Procédé selon l'une des revendications 2 à 4, **caractérisé en ce que**, au cours de la première étape, on positionne le faisceau de soudage (4) en référence sur la source lumineuse (11) en visant avec le faisceau laser de visée ou le faisceau de soudage (4), le diaphragme de la source lumineuse (11).

6. Procédé selon l'une des revendications 2 ou 3, **caractérisé en ce que**, au cours de la première étape, on positionne le faisceau de soudage (4) en référence sur la source lumineuse (11) en visant avec le faisceau laser de visée ou le faisceau laser de soudage (4), un point O dont la distance avec le diaphragme de la source lumineuse (11) est maitrisée.

7. Procédé selon la revendication 1, **caractérisé en ce que** on ajuste la visée de la caméra (6) par déplacement de celle-ci et/ou par fenêtrage électronique.

8. Procédé selon la revendication 1, **caractérisé en ce qu'**au cours d'une étape intermédiaire avant de verrouiller la caméra (6), on règle la distance de focalisation de ladite caméra sur la source lumineuse (11).

9. Dispositif pour la mise en oeuvre du procédé selon l'une des revendications précédentes, dans une installation de soudage d'au moins deux flans métalliques (1, 2) comprenant une tête de soudage (3) générant un faisceau de soudage (4) à haute densité d'énergie et une caméra (6) de contrôle thermographique de la soudure réalisée au moyen dudit faisceau de soudage (4), toutes deux supportées par un bâti (5), **caractérisé en ce qu'**il comporte
- des moyens de déplacement du bâti,
- une source lumineuse (11) fixe, située dans une zone de l'installation de soudage, accessible par le faisceau de soudage (4),
- des moyens (7) de réglage de la position de la caméra (6) par rapport à la tête de soudage (3).

10. Dispositif selon la revendication 9, **caractérisé en ce que** la source lumineuse (11) est constituée d'une cavité (12) cylindrique ou sphérique et d'un diaphragme formé par une plaque opaque (13) percée d'un orifice (14) dont le diamètre est inférieur à 1 mm, l'épaisseur de la plaque opaque (13) au niveau de l'orifice (14) étant inférieure à 0,3 mm.

## Claims

1. Position control method of a camera for thermographic monitoring of a weld, with respect to a welding head, in a welding device with at least two metallic blanks (1, 2) according to a parting line, comprising a welding head (3) generating a high-power beam (4), laser or electron beam, and a camera (6) for thermographic monitoring of the weld produced by means of said welding head, both being supported by a framing (5), **characterised in that**:
- during a first step, the welding beam (4) is reference-positioned to a pinpoint light source (11), situated in a zone of the welding device accessible to the welding beam (4), in a plane P nearby or merging with the mid-plane of the two planes comprising the mainsides (1A, 2A) of the metallic blanks (1, 2), facing the welding head (3) and the camera (6);
- during a second step, the framing (5) is displaced in the direction of the parting line, by a certain distance d corresponding to the wanted distance **in that** direction, between the point of impact (I) of the welding beam (4) on the metallic blanks (1, 2) to be weld and the sighting zone (18) of the camera (6) on said blanks;
- during a third step, the sighting zone of the camera (6) is adjusted in the way that it sights the light source (11);
- during a last step, the camera (6) is locked in position.

2. Method according to claim 1, **characterised in that**, during the first step, the welding beam (4) is reference-positioned by means of a visible laser sighting beam (19) of low power, coaxial to the welding beam (4).

3. Method according to claim 1, **characterised in that** in case the welding beam (4) is a laser beam, during the first step, said welding beam (4) is reference-positioned by means of this beam (4), coupling it to a device that makes it visible.

4. Method according to claim 1, **characterised in that** a light source (11), comprising a diaphragm that generates isotropic light at least in the directions leading to the camera (6), is chosen.

5. Method according to one of the claims 2 to 4, **characterised in that**, during the first step, the welding beam (4) is reference-positioned towards the light source (11) by sighting the diaphragm of the light source (11) with the laser sighting beam or the welding beam (4).

6. Method according to one of the claims 2 or 3, **characterised in that**, during the first step, the welding beam (4) is reference-positioned towards the light source (11) by sighting, with the laser sighting beam or the laser welding beam (4), a point O, the distance of which to the diaphragm of the light source (11) is surmounted.

7. Method according to claim 1, **characterised in that** the sighting of the camera (6) is adjusted by displacing it, and/or by electronic windowing.

8. Method according to claim 1, **characterised in that**, during an intermediary step taking place before locking the camera (6), the focusing distance of said camera to the light source (11) is controlled.

9. Equipment for putting the method according to any of the previous claims into practice in a welding device with at least two metallic blanks (1, 2), comprising a welding head (3) generating a high-power welding beam (4) and a camera (6) for thermographic monitoring of the weld produced by means of said welding beam (4), both being supported by a framing (5), **characterised in that** said equipment comprises:
- means for moving the framing,
- a fixed light source (11), situated in a zone of the welding device, accessible to the welding beam (4),
- means (7) for position-control of the camera (6) in relation to the welding head (3).

10. Equipment according to claim 9, **characterised in that** the light source (11) consists of a cylindrical or spherical cavity (12) and of a diaphragm, formed from an opaque plate (13) with a perforated orifice (14), the diameter of said orifice being less than 1 mm and the thickness of the opaque plate (13), at the level of the orifice (14) being less than 0,3 mm.

## Patentansprüche

1. Verfahren zur Regelung der Position einer Kamera für thermographische Überwachung einer Schweißung in Bezug auf einen Schweißkopf, in einer Schweißvorrichtung mit wenigstens zwei metallischen Platten (1, 2), die gemäß einer Trennebene, welche einen, ein Strahlenbündel hoher Energiedichte (4), Laser oder Elektronenstrahl, erzeugenden Schweißkopf (3), und eine Kamera (6) zur thermographischen Überwachung der, mittels des Schweißkopfes realisierten Schweißung, umfasst, welche beide von einem Gestell (5) getragen werden, **dadurch gekennzeichnet, daß**:
- während eines ersten Schrittes, man den Schweißstrahl (4) in Bezug auf eine punktförmige Lichtquelle (11) in Referenzposition bringt, welche in einem, dem Schweißstrahl (4) zugänglichen Bereich der Schweißeinrichtung gelegen ist, die Lichtquelle in einer Ebene P, benachbart oder verschmolzen mit der Mittelebene der zwei, die Hauptseiten (1A, 2A) der metallischen Platten (1, 2) enthaltenden, und gegenüber dem Schweißkopf (3) und der Kamera (6) liegenden Ebenen angeordnet ist;
- während eines zweiten Schrittes, das Gestell (5) in Richtung der Trennebene um eine Distanz d verschoben wird, die Distanz d dem gewünschten Abstand, in dieser Richtung, zwischen dem Auftreffpunkt (I) des Schweißstrahles (4) auf den zu schweißenden metallischen Platten (1, 2) und dem Visierbereich (18) der Kamera (6) auf die genannten Platten entspricht;
- während eines dritten Schrittes, richtet man die Visiereinrichtung der Kamera (6) auf die Lichtquelle (11);
- in einem letzten Schritt, wird die Position der Kamera (6) verriegelt.

2. Verfahren nach Anspruch 1, **dadurch gekennzeichnet, daß** man während des ersten Schrittes, den Schweißstrahl (4), mit Hilfe eines sichtbaren Laserrichtstrahls (19), kleiner Leistung, und koaxial zum Schweißstrahl (4) in Referenzposition bringt.

3. Verfahren nach Anspruch 1, **dadurch gekennzeichnet, daß**, wenn der Schweißstrahl (4) ein Laserstrahl ist, man den Schweißstrahl (4), im ersten Schritt, mit Hilfe dieses Strahls (4) in Referenzposition bringt, indem man ihn mit einer Einrichtung koppelt, die ihn sichtbar macht.

4. Verfahren nach Anspruch 1, **dadurch gekennzeichnet, daß** man eine Lichtquelle (11) auswählt, welche mit einer Blende versehen ist, die isotropes Licht erzeugt, das wenigstens in den zur Kamera (6) weisenden Richtungen ausgerichtet ist.

5. Verfahren nach einem der Ansprüche 2 bis 4, **dadurch gekennzeichnet, daß** man während des ersten Schrittes, den Schweißstrahl (4) auf die Lichtquelle (11) in Referenzposition bringt, indem man mit dem Laserrichtstrahl oder dem Schweißstrahl (4) die Blende der Lichtquelle (11) anvisiert.

6. Verfahren nach einem der Ansprüche 2 oder 3, **dadurch gekennzeichnet, daß** man während des ersten Schrittes, den Schweißstrahl (4) auf die Lichtquelle (11) in Referenzposition bringt, indem man mit dem Laserrichtstrahl oder dem Laserschweißstrahl (4) einen Punkt O, dessen Abstand zur Blende der Lichtquelle (11) überwunden wird, anvisiert.

7. Verfahren nach Anspruch 1, **dadurch gekennzeichnet, daß** man die Kamera (6) durch ihre Verschiebung und/oder mittels elektronischer Einblendung ausrichtet.

8. Verfahren nach Anspruch 1, **dadurch gekennzeichnet, dass** man während eines Zwischenschrittes welcher vor der Verriegelung der Kamera (6) stattfindet, die Fokussierung der genannten Kamera (6) auf ihren Abstand zur Lichtquelle (11) einstellt.

9. Einrichtung zur Durchführung des Verfahrens, nach einem der vorgenannten Ansprüche, in einer Schweißanlage mit wenigstens zwei metallischen Platten (1, 2), welche einen, einen Schweißstrahl (4), hoher Energiedichte erzeugenden Schweißkopf (3) und eine Kamera (6) zur thermographischen Überwachung der, mittels des genannten Schweißstrahles (4) realisierten Schweißung, in sich umfasst, und beide von einem Gestell (5) getragen sind, **dadurch gekennzeichnet, daß** die Einrichtung folgendes umfaßt:
- Mittel zur Verschiebung des Gestells,
- eine feststehende Lichtquelle (11), welche sich in einem, dem Schweißstrahl (4) zugänglichen Bereich der Schweißeinrichtung befindet,
- Mittel (7) zum Einstellen der Position der Kamera (6) in Bezug zum Schweißkopf (3).

10. Einrichtung nach Anspruch 9, **dadurch gekennzeichnet, daß** die Lichtquelle (11) aus einer zylindrischen oder kugelförmigen Aussparung (12) und einer Blende, die aus einer lichtundurchlässigen Platte (13) besteht, die Platte mit einer Öffnung (14), mit Durchmesser kleiner als 1 mm durchbohrt ist, und die Stärke der lichtundurchlässigen Platte (13), in der Höhe der Öffnung (14) weniger als 0.3 mm ist, besteht.
